# EUROPÄISCHE PATENTSCHRIFT

(11) **EP 1 385 611 B1**
(45) Veröffentlichungstag und Bekanntmachung des Hinweises auf die Patenterteilung: **02.01.2008**
(21) Anmeldenummer: 02724262.7
(22) Anmeldetag: 28.03.2002
(51) Int. Cl.: B01F 17/00, C08G 83/00, C08G 18/10

(54) **NEUE POLYMERE DISPERGIERADDITIVE MIT HYPERVERZWEIGTEN STRUKTUREN**
NOVEL POLYMER DISPERSANTS HAVING HYPERBRANCHED STRUCTURES
NOUVEAUX DISPERSANTS POLYMERES A STRUCTURES HYPERRAMIFIEES

(30) Priorität: 04.04.2001 DE 10116767
(43) Veröffentlichungstag der Anmeldung: 04.02.2004
(73) Patentinhaber: BASF Aktiengesellschaft, 67056 Ludwigshafen (DE)
(72) Erfinder: BRUCHMANN, Bernd, 67251 Freinsheim (DE); KÖNEMANN, Martin, 68163 Mannheim (DE); HEES, Ulrike, 68167 Mannheim (DE)
(86) Internationale Anmeldenummer: PCT/EP2002/003500
(87) Internationale Veröffentlichungsnummer: WO 2002/081071

(56) Entgegenhaltungen:
- EP-A- 1 026 185
- WO-A-01/10923
- WO-A-02/36695

## Beschreibung

Die vorliegende Erfindung betrifftein Verfahren zur Herstellung von hydrophil modifizierten hyperverzweigten Polyurethanen, indem man zunächst ein hyperverzweigtes Polyurethan mit 2 bis 100 NCO-Gruppen und einem Molekulargewicht von 500 bis 50.000 g herstellt unter Einsatz von einem oder mehreren ABₓ-Monomeren, wobei A eine Isocanatgruppe bedeutet und B eine mit Isocyanat zur Reaktion fähige Gruppe oder umgekehrt, und wobei x eine natürliche Zahl von 2 bis 8 ist, und das hyperverzweigte Polyurethan mit einem oder mehreren Polyetherderivaten umsetzt, ausgewählt aus Polyethylenglykolderivaten der allgemeinen Formel I 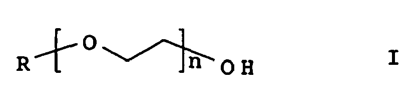 und Poly-THF-Derivaten der allgemeinen Formel II 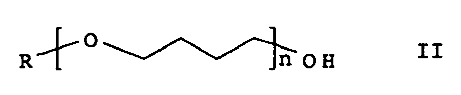 in denen jeweils
- R: ausgewählt ist aus C₁-C₄₀-Alkyl oder C₇-C₁₃-Aralkyl oder C₆-C₁₄-Aryl und
- n: eine ganze Zahl von 2 bis 500 bedeutet, bevorzugt 2 bis 200,
und Copolymeren aus Ethylenoxid und Propylenoxid oder Butylenoxid oder Terpolymeren aus Ethylenoxid und Propylenoxid und Butylenoxid, die verzweigt sein können.

Speziell betrifft die vorliegende Erfindung ein Verfahren zur Herstellung von modifizierten polymeren Dispergieradditiven, dadurch gekennzeichnet, dass man ein hyperverzweigtes Polyurethan mit 2 bis 100 NCO-Gruppen und einem Molekulargewicht von 500 bis 50.000 g mit einem oder mehreren mit einem oder mehreren Polyetherderivaten umsetzt, ausgewählt aus Polyethylenglykolderivaten der allgemeinen Formel I 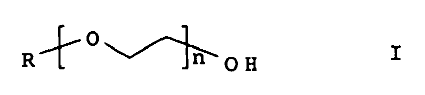 und Poly-THF-Derivaten der allgemeinen Formel II 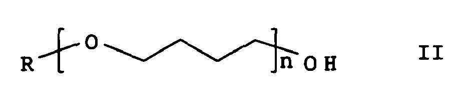 in denen jeweils
- R: ausgewählt ist aus Wasserstoff oder C₁-C₄₀-Alkyl oder C₇-C₁₃-Aralkyl oder C₆-C₁₄-Aryl und
- n: eine ganze Zahl von 2 bis 500 bedeutet, bevorzugt 2 bis 200,
und Copolymeren aus Ethylenoxid und Propylenoxid oder Butylenoxid oder Terpolymeren aus Ethylenoxid und Propylenoxid und Butylenoxid, die verzweigt sein können.

Dispergieradditive sind in zahlreichen Anwendungen, in denen Pigmente dauerhaft auf Oberflächen fixiert werden sollen, von großer technischer und wirtschaftlicher Bedeutung. Dabei müssen sie einerseits den üblicherweise hohen technischen Anforderungen genügen, andererseits müssen sie zu erschwinglichen Preisen herstellbar sein.

An technischen Anforderungen sind zu nennen:
- Flockungsstabilität, d.h. auch bei längerer Lagerung sollen die Pigmentpartikel in Pasten oder Lacken nicht agglomerieren;
- Gutes Fließverhalten, das heißt niedrige Fließgrenze und eine niedrigere Viskosität bei gleichem oder höherem Pigmentgehalt;
- Gute Unterstützung der optischen Eigenschaften, worunter hohe Farbstärke, hoher Glanz, hohes Chrom, gute Helligkeit, hohe Transparenz bzw. Lasur und veränderbare Farbtöne, ausgedrückt in großen hue-Werten.

Besonders kritisch sind diese Eigenschaften in Lacksystemen auf Lösemittelbasis, in lösemittelarmen Lacken und in Lacken auf wasserbasis sowie in sogenannten High-Solid-Lacksystemen. Lacksysteme auf Lösemittel- und auf Wasserbasis, lösemittelarme Lacke und High-Solid-Lacksysteme sind Formulierungen, die üblicherweise neben einem Pigment mindestens ein Dispergieradditiv und ein Bindemittel enthalten.

Während die Pigmente als solche nur noch wenig untersucht werden und man auf die allgemein bekannten organischen oder anorganischen Pigmente zurückgreift, sind die Dispergieradditive heute von großem Interesse. Neben den Eigenschaften des Dispergieradditivs als solchem spielen auch die Kombination mit dem jeweiligen Bindemittel eine Rolle, mit denen die Dispergieradditive harmonieren müssen. So dürfen Bindemittel und Dispergieradditiv keinesfalls unverträglich sein, weil es andernfalls zu einer spontanen Entmischung der betreffenden Formulierung kommen kann, wodurch die Formulierung für technische Anwendungen unbrauchbar wird.

In US 6,096,801 werden Pigmentformulierungen offenbart, in denen 0,1 bis 10 Gewichtsprozent Pigment und ein Harz, beispielsweise Kolophonium, mit Dendrimeren auf Basis von Acetoacetmetaxiliden beispielsweise den BOLTORN-®-Marken, oder β-Aminopropionsäureamiden enthalten sind. Die offenbarten Dendrimere können an den Enden der Arme mit Molekülen umgesetzt werden, die mehrere Hydroxylgruppen tragen, beispielsweise Pentaerythrit. Sie eignen sich gut als Dispergieradditive, sind jedoch aufwändig zu synthetisieren, und die unter Verwendung von Dendrimeren hergestellten Formulierungen sind deshalb wirtschaftlich unvorteilhaft.

WO 00/37542 offenbart ebenfalls die Verwendung von ausgewählten Dendrimeren als Dispergiermittel für hydrophobe Partikel in wässrigen Systemen. Bezüglich der Wirtschaftlichkeit gilt das oben Gesagte.

In US 5,561,214 werden hyperverzweigte Polyaspartatester offenbart, die durch Selbstkondensation von Hydroxyaspartatestern hergestellt werden. Die hyperverzweigten Polyaspartate können entweder als solche eingesetzt werden und eignen sich als Bindemittel, oder man setzt sie mit Polyisocyanaten zu Polyharnstoffen um, die sich als Bindemittel für verschiedene Lacksysteme eignen. Zu einer wirtschaftlichen Verwendung als Dispergieradditiv sind sie in der Herstellung jedoch zu teuer.

Es bestand die Aufgabe, neue Dispergieradditive bereitzustellen, welche die oben aufgeführten technischen Vorteile bieten und leicht synthetisch zugänglich sind. Weiterhin bestand die Aufgabe, ein Verfahren zur Herstellung der neuen Dispergieradditive bereitzustellen, und schließlich bestand die Aufgabe, Verwendungen für die Dispergieradditive und die dadurch erhältlichen Dispersionen bereitzustellen.

Überraschend wurde gefunden, dass die eingangs definierten hydrophil modifizierten Polyurethane mit hyperverzweigten Strukturen diese Aufgaben lösen. Die Darstellung von Polyurethanen mit hyperverzweigten Strukturen, die im Folgenden auch hyperverzweigte Polyurethane genannt werden, und ihre Modifizierung wird unten beschrieben.

Unter Polyurethanen sind im Rahmen der vorliegenden Erfindung nicht nur solche Polymere zu verstehen, die ausschließlich durch Urethangruppen verknüpft sind, sondern in einem allgemeineren Sinne Polymere, die durch Umsetzung von Di- oder Polyisocyanaten mit Verbindungen erhalten werden können, die aktive Wasserstoffatome enthalten. Polyurethane im Sinne der vorliegenden Erfindung können also neben Urethangruppen auch Harnstoff-, Allophanat-, Biuret-, Carbodiimid-, Amid-, Ester, Ether-, Uretonimin-, Uretdion-, Isocyanurat- oder Oxazolidingruppen enthalten. Als Übersicht sei beispielhaft genannt: Kunststoffhandbuch/Saechtling, 26. Auflage, Carl-Hanser-Verlag, München 1995, Seite 491 ff. Insbesondere enthalten Polyurethane im Sinne der vorliegenden Erfindung Harnstoffgruppen.

Die vorliegende Erfindung geht aus von hyperverzweigten Polyurethanen, die molekular und strukturell uneinheitlich sind. Sie unterscheiden sich durch ihre molekulare Uneinheitlichkeit von Dendrimeren und sind mit erheblich geringerem Aufwand herzustellen.

Die Synthese der zur Ausführung der vorliegenden Erfindung eingesetzten hyperverzweigten Polyurethane kann beispielsweise wie im Folgenden geschildert durchgeführt werden.

Zur Synthese der hyperverzweigten Polyurethane werden bevorzugt ABₓ-Monomere eingesetzt, die sowohl Isocyanat-Gruppen sowie Gruppen, die mit Isocyanat-Gruppen unter Bildung einer Verknüpfung reagieren können, aufweisen. Bei x handelt es sich um eine natürliche Zahl von 2 bis 8. Bevorzugt beträgt x 2 oder 3. Entweder handelt es sich bei A um die Isocyanat-Gruppen und bei B um mit diesen zur Reaktion fähige Gruppen oder es kann der umgekehrte Fall vorliegen.

Bei den mit den Isocyanat-Gruppen zur Reaktion fähigen Gruppen handelt es sich bevorzugt um OH-, NH₂-, NH-, SH- oder COOH-Gruppen.

Die ABₓ-Monomere sind in bekannter Art und Weise mittels verschiedener Techniken herstellbar.

ABₓ-Monomere können beispielsweise nach der von WO 97/02304 offenbarten Methode unter Anwendung von Schutzgruppentechniken synthetisiert werden. Beispielhaft sei diese Technik an der Herstellung eines AB₂-Monomers aus 2,4-Toluylendiisocyanat (TDI) und Trimethylolpropan erläutert. Zunächst wird eine der Isocyanat-Gruppen des TDI in bekannter Art und Weise verkappt, beispielsweise durch Umsetzung mit einem Oxim. Die verbleibende freie NCO-Gruppe wird mit Trimethylolpropan umgesetzt, wobei eine der drei OH-Gruppen mit der Isocyanat-Gruppe reagiert. Nach Abspalten der Schutzgruppe wird ein Molekül mit einer Isocyanat-Gruppe und zwei OH-Gruppen erhalten.

Besonders vorteilhaft können die ABx-Moleküle nach der von DE-A 199 04 444 offenbarten Methode synthetisiert werden, bei der keine Schutzgruppen erforderlich sind. Bei dieser Methode werden Di- oder Polyisocyanate eingesetzt und mit Verbindungen, die mindestens zwei mit Isocyanatgruppen zur Reaktion fähige Gruppen aufweisen, umgesetzt. Zumindest einer der Reaktionspartner weist Gruppen mit gegenüber dem anderen Reaktionspartner unterschiedlicher Reaktivität auf. Bevorzugt weisen beide Reaktionspartner Gruppen mit gegenüber dem anderen Reaktionspartner unterschiedlicher Reaktivität auf. Die Reaktionsbedingungen werden so gewählt, dass nur bestimmte zur Reaktion fähige Gruppen miteinander reagieren können.

Bevorzugte Di- und/oder Polyisocyanate mit NCO-Gruppen unterschiedlicher Reaktivität sind insbesondere leicht und billig verfügbare Isocyanate, beispielsweise aromatische Isocyanate wie 2,4-Toluylendiisocyanat (2,4-TDI), 2,4'-Diphenylmethandiisocyanat (2,4'-MDI), Triisocyanatotoluol, oder aliphatische Isocyanate, wie Isophorondiisocyanat (IPDI), 2-Butyl-2-ethylpentamethylendiisocyanat, 2-Isocyanatopropylcyclohexylisocyanat, 2,4,4- oder 2,2,4-Trimethylhexamethylendiisocyanat, 2,4'-Methylenbis(cyclohexyl)diisocyanat und 4-Methyl-cyclohexan-1,3-diisocyanat (H-TDI).

Weitere Beispiele von Isocyanaten mit Gruppen unterschiedlicher Reaktivität sind 1,3-Phenylendiisocyanat, 1,4-Phenylendiisocyanat, 1,5-Naphthylendiisocyanat, Diphenyldiisocyanat, Tolidindiisocyanat und 2,6-Toluylendüsocyanat.

Natürlich können auch Mischungen der genannten Isocyanate verwendet werden.

Als Verbindungen mit mindestens zwei mit Isocyanaten zur Reaktion fähigen Gruppen werden vorzugsweise di-, tri- oder tetrafunktionelle Verbindungen eingesetzt, deren funktionelle Gruppen gegenüber NCO-Gruppen eine unterschiedliche Reaktivität aufweisen. Bevorzugt sind Verbindungen mit mindestens einer primären und mindestens einer sekundären Hydroxylgruppe, mindestens einer Hydroxylgruppe und mindestens einer Mercaptogruppe, besonders bevorzugt mit mindestens einer Hydroxylgruppe und mindestens einer Aminogruppe im Molekül, insbesondere Aminoalkohole, Aminodiole und Aminotriole, da die Reaktivität der Aminogruppe gegenüber der Hydroxylgruppe bei der Umsetzung mit Isocyanat deutlich höher ist.

Beispiele für die genannten Verbindungen mit mindestens zwei mit Isocyanaten zur Reaktion fähigen Gruppen unterschiedlicher Reaktivität sind Propylenglykol, Glycerin, Mercaptoethanol, Ethanolamin, N-Methylethanol-amin, Diethanolamin, Ethanolpropanolamin, Dipropanolamin, Diisopropanolamin, 2-Amino-1,3-propandiol, 2-Amino-2-methyl-1,3-propandiol oder Tris(hydroxymethyl)-aminomethan. Weiterhin sind auch Mischungen der genannten Verbindungen einsetzbar.

Die Herstellung eines AB₂-Moleküls sei beispielhaft für den Fall eines Diisocyanates mit einem Aminodiol erläutert. Hierbei wird zunächst ein Mol eines Diisocyanats mit einem Mol eines Aminodiols, beispielsweise 2-Amino-1,3-propandiol, bei niedrigen Temperaturen, vorzugsweise im Bereich zwischen -10 bis 30 °C, umgesetzt. In diesem Temperaturbereich erfolgt eine praktisch vollständige Unterdrückung der Urethanbildungsreaktion, und die NCO-Gruppen des Isocyanats reagieren ausschließlich mit der Aminogruppe des Aminodiols. Das gebildete AB₂-Molekül weist eine freie NCO-Gruppe sowie zwei freie OH-Gruppen auf und kann zur Synthese eines hyperverzweigten Polyurethans eingesetzt werden.

Durch Erwärmen oder-Katalysatorzugabe kann dieses AB₂-Molekül intermolekular zu einem hyperverzweigten Polyurethan reagieren. Als Katalysatoren für die Herstellung der hyperverzweigten Polyurethane werden beispielsweise organische Zinnverbindungen wie Zinndiacetat, Zinndioctoat, Dibutylzinndilaurat oder stark-basische Amine wie Diazabicyclooctan, Diazabicyclononan, Diazabicycloundecan, Triethylamin, Pentamethyldiethylentriamin, Tetramethyldiaminoethylether oder vorzugsweise Triethylendiamin oder Bis (*N*,*N-*dimethylaminoethyl)ether oder auch weitere basische Verbindungen wie beispielsweise substituierte Imidazole eingesetzt. Es können auch Mischkatalysatoren aus einer mindestens einer organischen Zinnverbindung und mindestens einem stark basischen Amin eingesetzt werden. Die Katalysatoren werden vorzugsweise in einer Menge von 0,01 bis 10 Gew.-%, vorzugsweise 0,05 bis 5 Gew.-%, bezogen auf Isocyanat, eingesetzt. Die Synthese des hyperverzweigten Polyurethans erfolgt vorteilhaft ohne vorherige Isolierung des AB₂-Moleküls in einem weiteren Reaktionsschritt bei erhöhter Temperatur, vorzugsweise im Bereich zwischen 30 und 80°C. Bei Verwendung des geschilderten AB₂-Moleküls mit zwei OH-Gruppen und einer NCO-Gruppe entsteht ein hyperverzweigtes Polymer, welches pro Molekül eine freie NCO-Gruppe sowie eine vom Polymerisationsgrad abhängige Zahl von OH-Gruppen aufweist. Die Reaktion kann bis zu hohen Umsätzen durchgeführt werden, wodurch sehr hochmolekulare Strukturen erhalten werden. Sie wird vorzugsweise durch Zugabe geeigneter monofunktioneller Verbindungen oder durch Zugabe einer der Ausgangsverbindungen zur Herstellung des AB₂-Moleküls beim Erreichen des gewünschten Molekulargewichtes abgebrochen werden. Je nach der zum Abbruch verwendeten Ausgangsverbindung entstehen entweder vollständig NCO-terminierte oder vollständig OH-terminierte Moleküle.

Alternativ kann beispielsweise auch ein AB₂-Molekül aus einem Mol Glycerin und 2 mol TDI hergestellt werden. Bei tiefer Temperatur reagieren vorzugsweise die primären Alkoholgruppen sowie die Isocyanat-Gruppe in 4-Stellung, und es wird ein Addukt gebildet, welches eine OH-Gruppe und zwei Isocyanat-Gruppen aufweist und das wie geschildert bei höheren Temperaturen zu einem hyperverzweigten Polyurethan umgesetzt werden kann. Es entsteht zunächst ein hyperverzweigtes Polyurethan, welches eine freie OH-Gruppe sowie eine vom Polymerisationsgrad abhängige mittlere Anzahl von NCO-Gruppen aufweist.

Die Anzahl der NCO-Gruppen pro Molekül ist von 2 bis 100, bevorzugt von 3 bis 20 und besonders bevorzugt bis 10.

Das Molekulargewicht M_{w} der für die vorliegende Erfindung zu verwendenden hyperverzweigten Polyurethane beträgt 500 bis maximal 50.000 g/mol, bevorzugt maximal 15.000 g/mol und besonders bevorzugt maximal 10.000 g/mol und ganz besonders bevorzugt 5.000 g/mol.

Die Herstellung der hyperverzweigten Polyurethane kann prinzipiell ohne Lösungsmittel, bevorzugt aber in Lösung erfolgen. Als Lösungsmittel prinzipiell geeignet sind alle bei der Umsetzungstemperatur flüssigen und gegenüber den Monomeren und Polymeren inerten Verbindungen.

Andere Produkte sind durch weitere Synthesevarianten zugänglich. Beispielhaft seien an dieser Stelle AB₃-Moleküle genannt. AB₃-Moleküle lassen sich beispielsweise durch Reaktion von Diisocyanaten mit Verbindungen mit 4 gegenüber Isocyanat zur Reaktion fähigen Gruppen erhalten. Beispielhaft sei die Umsetzung von Toluylendiisocyanat mit Tris(hydroxymethyl)-aminomethan genannt.

Zum Abbruch der Polymerisation können polyfunktionelle Verbindungen eingesetzt werden, die mit den jeweiligen A-Gruppen reagieren können. Auf diese Art und Weise können mehrere kleine hyperverzweigte Moleküle zu einem großen hyperverzweigten Molekül verknüpft werden.

Hyperverzweigte Polyurethane mit kettenverlängerten Ästen lassen sich beispielsweise erhalten, indem zur Polymerisationsreaktion neben ABₓ-Molekülen zusätzlich im molaren Verhältnis 1:1 ein Diisocyanat und eine Verbindung, die zwei mit Isocyanatgruppen zur Reaktion fähige Gruppen aufweist, eingesetzt werden. Diese zusätzlichen AA- bzw. BB-Verbindungen können auch noch über weitere funktionelle Gruppen verfügen, die bei den Reaktionsbedingungen aber nicht reaktiv gegenüber den A- oder B-Gruppen sein dürfen. Auf diese Art und Weise können weitere Funktionalitäten in das hyperverzweigte Polymer eingebracht werden.

Weitere Synthesevarianten für hyperverzweigte Polyurethane finden sich in unseren bislang unveröffentlichten Anmeldungen mit den Aktenzeichen DE 100 13 187.5 und DE 100 30 869.4.

Besonders vorteilhaft können die funktionellen Gruppen hydrophobiert, hydrophiliert oder umfunktionalisiert werden. Auf diese Art und Weise werden der jeweiligen Anwendung der Dispergieradditive besonders angepasste Polymere zugänglich, und es werden pigmentaffine Gruppen eingeführt. Zur Umfunktionalisierung eignen sich aufgrund ihrer Reaktivität ganz besonders solche hyperverzweigten Polyurethane, die Isocyanat-Gruppen aufweisen. Selbstverständlich können auch OH- oder NH₂-terminierte Polyurethane mittels geeigneter Reaktionspartner umfunktionalisiert werden.

Beispiele für pigmentaffine Gruppen, die mittels geeigneter Reaktionspartner eingeführt werden, sind -COOH, -COOR', -CONHR', -CONH₂, -OH, -SH, -NH₂, -NHR', -NR'₂, -SO₃H, -SO₃R', -N(Phthalimid), -NHCOOR', -NHCONH₂, -NRCONHR' oder -CN. Bei den Resten R' der besagten Gruppen handelt es sich um geradkettige oder verzweigte Alkylreste, um Aralkylreste oder um Arylreste, die auch noch weiter substituiert sein können, beispielsweise um C₁-C₄₀-Alkylreste oder um C₆-C₁₄-Arylreste. Besonders bevorzugt sind die folgenden Reste:
C₁-C₄₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl oder n-Eicosyl, besonders bevorzugt ist Methyl;
C₆-C₁₄-Aryl, beispielsweise Phenyl, α-Naphthyl, β-Naphthyl, 1-Anthracenyl, 2-Anthracenyl oder 9-Anthracenyl C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl.

Gruppen, die über acide H-Atome verfügen, können durch Behandlung mit geeigneten Basen wie beispielsweise Diethanolamin oder Triethanolamin in die entsprechenden Salze übergeführt werden. Analog lassen sich basische Gruppen mit geeigneten Säuren wie beispielsweise α-Hydroxycarbonsäuren oder a-Aminosäuren oder auch a-Hydroxysulfonsäure in die entsprechenden Salze überführen. Dadurch lassen sich wasserlösliche hyperverzweigte Polyurethane erhalten.

Durch Umsetzung NCO-terminierter Produkte mit aliphatischen oder aromatischen Alkoholen, Thiolen, primären oder sekundären Aminen oder Carbonsäuren lassen sich hydrophobierte Produkte erhalten. Geeignet sind insbesondere Alkohole und primäre oder sekundäre Amine mit C₈-C₄₀-Alkylresten C₆-C₁₄-Arylresten, wobei die Reste wie vorstehend definiert sind, oder mit heteroaromatischen Gruppen wie beispielsweise α-Pyridyl, β-Pyridyl, γ-Pyridyl, N-Pyrryl, α-Pyrryl, β-Pyrryl, Porphyrinyl, 2-Furanyl, 3-Furanyl, 2-Thiophenyl, 3-Thiophenyl, N-Pyrazolyl, N-Imidazolyl, N-Triazolyl, N-Oxazolyl, N-Indolyl, N-Carbazolyl, 2-Benzofuranyl, 2-Benzothiophenyl, N-Indazolyl, Benztriazolyl, 2-Chinolinyl, 3-Isochinolinyl oder α-Phenanthrolinyl.

Ganz besonders bevorzugt sind aromatische Amine wie beispielsweise Anilin oder α-Naphthylamin, Besonders geeignete Carbonsäurederivate sind beispielsweise Carbonsäuren und Carbonsäureamide von aliphatischen C₂-C₁₆-Mono- oder Dicarbonsäuren und aromatischen C₆-C₁₄-Mono- oder Dicarbonsäuren. Ganz besonders bevorzugt ist die Umsetzung mit Phthalimid.

Säuregruppen lassen sich beispielsweise durch Umsetzung mit Hydroxycarbonsäuren, Mercaptocarbonsäuren, Hydroxysulfonsäuren oder Aminosäuren einführen. Als Beispiele geeigneter Reaktionspartner seien Hydroxyessigsäure, Hydroxypivalinsäure, 4-Hydroxybenzoesäure, 12-Hydroxydodecansäure, 2-Hydroxyethansulfonsäure, Mercaptoessigsäure, Dimethylolpropionsäure, Glycin, β-Alanin oder Taurin genannt.

Die oben beschriebenen hyperverzweigten Polyurethane lassen sich erfindungsgemäß als Dispergieradditive verwenden, wenn sie mindestens eine hydrophile Gruppe aufweisen, ausgewählt aus -COOH, -CONHR', -CONH₂, -OH, -SH, -NH₂, -NHR', -NR'₂, -SO₃H, -SO₃R', -NHCOOR' und -NHCONH₂.

Bevorzugt ist die hydrophile Modifizierung der oben beschriebenen hyperverzweigten Polyurethane zur Herstellung von modifizierten polymeren Dispergieradditiven. Gegenstand der vorliegenden Erfindung ist somit die Verwendung von hyperverzweigten Polyurethanen und bevorzugt hydrophil modifizierter hyperverzweigter Polyurethane als Dispergieradditive. Gegenstand der vorliegenden Erfindung ist weiterhin ein Verfahren zur Herstellung von neuen modifizierten polymeren Dispergieradditiven unter Verwendung der oben beschriebenen hyperverzweigten Polyurethane.

Hydrophilierte, aber nicht ionische Produkte lassen sich bevorzugt durch Reaktion NCO-terminierter Polymere mit Polyetheralkoholen, wie beispielsweise Di-, Tri- oder Tetra- oder Polyethylenglykol erhalten, besonders bevorzugt ist hier jedoch die Reaktion mit bezüglich OH-Gruppen monofunktionellen Polyethylenoxid-alkoholen.

Das erfindungsgemäße Verfahren ist gekennzeichnet durch die Umsetzung der oben beschriebenen hyperverzweigten Polyurethane mit 0 bis 100 hydrophilen Gruppen mit einem Polyetherderivat oder einer Mischung aus mindestens zwei Polyetherderivaten.

Unter Polyetherderivaten im Sinne der vorliegenden Erfindung sind beispielsweise Verbindungen der allgemeinen Formel I 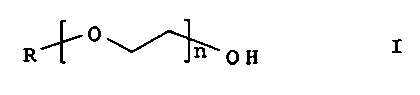 zu verstehen, wobei die Variablen wie folgt definiert sind.

R ausgewählt aus Wasserstoff oder bevorzugt
C₁-C₄₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl oder n-Eicosyl, besonders bevorzugt ist Methyl;
C₆-C₁₄-Aryl, beispielsweise Phenyl, α-Naphthyl, β-Naphthyl, 1-Anthracenyl, 2-Anthracenyl oder 9-Anthracenyl
C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl.
- n: eine ganze Zahl von 2 bis 500, bevorzugt 2 bis 200, besonders bevorzugt 5 bis 100 und ganz besonders bevorzugt bis 50.

Weiterhin sind unter Polyetherderivaten im Sinne der vorliegenden Erfindung auch Poly-THF-Derivate der allgemeinen Formel II 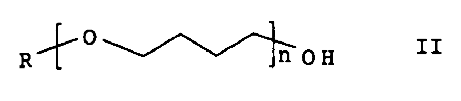 zu verstehen, in denen die Variablen wie oben definiert sind.

Weiterhin sind unter Polyetherderivaten im Sinne der vorliegenden Erfindungen auch Copolymere aus Ethylenoxid und Propylenoxid oder Butylenoxid oder Terpolymeren aus Ethylenoxid und Propylenoxid und Butylenoxid zu verstehen, wobei die Copolymere als Blockcopolymere oder statistische Copolymere beziehungsweise Terpolymere vorliegenden können. Dabei sind die Molverhältnisse der Monomeren unkritisch. Beispiele für Blockcopolymere sind die Pluronics®-Marken der BASF Aktiengesellschaft. Schließlich sind unter Polyetherderivaten im Sinne der vorliegenden Erfindung auch die Tetronics®-Marken der BASF Aktiengesellschaft zu verstehen, das sind verzweigte Blockcopolymere von Ethylenoxid und Propylenoxid, bei denen die Verzweigung durch den Einbau einer Ethylendiamin-Einheit pro Molekül erfolgt.

Bevorzugte Polyethylenglykolderivate im Sinne der vorliegenden Erfindung sind monomethylverkappte Verbindungen der allgemeinen Formel I.

Die Umsetzung der hyperverzweigten Polyurethane mit den Polyethylenglykolderivaten erfolgt üblicherweise bei Temperaturen von -20 bis +60°C. Die Umsetzung kann durch Zugabe eines Katalysators durchgeführt werden. Als Katalysatoren für die Herstellung der erfindungsgemäßen modifizierten Polyurethane werden eingesetzt:
organische Zinnverbindungen wie beispielsweise Zinndiacetat, Zinndioctoat, Dibutylzinndilaurat,
oder stark basische Amine wie Diazabicyclooctan, Diazabicyclononan, Diazabicycloundecan, Triethylamin, Pentamethyldiethylentriamin, Tetramethyldiaminoethylether, oder vorzugsweise Triethylendiamin oder Bis(N,N-dimethylaminoethyl)ether oder auch schwach basische Amine wie beispielsweise Imidazol.

Es können auch Mischkatalysatoren aus einer mindestens einer organischen Zinnverbindung und mindestens einem stark basischen Amin eingesetzt werden. Die Katalysatoren werden vorzugsweise in einer Menge von 0,01 bis 10 Gew.-%, vorzugsweise 0,05 bis 5 Gew.-%, eingesetzt. Man kann die Umsetzung in einem Lösemittel durchführen, wobei als Lösemittel prinzipiell alle Lösemittel geeignet sind, die weder mit dem Polyurethan noch mit dem Polyethylenglykolderivat reagieren.

Das Molverhältnis der Reaktionspartner beeinflusst die Dispergiereigenschaften des Polymers. Man kann die Molverhältnisse so wählen, dass eine NCO-Gruppe pro Äquivalent OH-Gruppen des Polyethylenglykolderivates eingesetzt werden. Man kann aber auch einen Unterschuss an Äquivalenten OH-Gruppen einsetzen und anschließend die nicht umgesetzten NCO-Gruppen des hyperverzweigten Polyurethans mit Alkanolen, Aryl- oder Alkylaminen, insbesondere Alkanolen und Alkylaminen mit C₈-C₄₀-Alkylresten oder Arylaminen mit C₆-C₁₄-Arylresten wie beispielsweise Anilin oder α-Naphthylamin, zu hydrophobierten Produkten umsetzen.

Ein weiterer Gegenstand der vorliegenden Erfindung sind polymere Dispergieradditive, erhältlich durch das oben beschriebene Verfahren.

Wünscht man die oben beschriebenen polymeren Dispergieradditive oder die erfindungsgemäßen modifizierten polymeren Dispergieradditive in Lacksystemen einzusetzen, so ist es bevorzugt, das polymere Dispergieradditiv oder das modifizierte polymere Dispergieradditiv kovalent an ein Polymer zu binden. Als Polymer werden Strukturen der allgemeinen Formel III

U-(M)_{y}-T III

verwendet. Dabei sind die Variablen wie folgt definiert:
U ausgewählt aus Wasserstoff,
C₁-C₁₈-Alkyl, verzweigt oder unverzweigt, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl und n-Octadecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.

C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;

C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
oder ein Rest aus einem Initiatormolekül, beispielsweise 2,2-Dimethyl-2-cyanoethyl, oder einem anderen Initiatormolekül wie beispielsweise den gängigen organischen Peroxiden, organischen Azoverbindungen, oder C-C-spaltenden Initiatoren wie Dialkylperoxiden, Peroxocarbonsäuren, Peroxidicarbonaten, Peroxidester, Hydroperoxide, Ketonperoxiden, Azodinitrilen oder Benzpinakolsilylethern.
- M: steht für eine oder mehrere verschiedene Monomereinheiten, beispielsweise (Meth)acryleinheiten, Acrylamideinheiten, Polyvinylacetateinheiten, Polyvinylalkoholeinheiten oder Polyethylenimideinheiten, lineare Polyurethane, Polyestereinheiten, Polystyroleinheiten, Polyethereinheiten wie beispielsweise Poly-THF-Einheiten, Polyethylen oder Polyamideinheiten;
- y: ist eine ganze Zahl von 10 bis 100.000, bevorzugt von 100 bis 10.000.
- T: sind funktionelle Gruppen, die mit den NCO-Gruppen oder OH-, NH- oder SH-Gruppen der erfindungsgemäßen polymeren Dispergieradditive reagieren können, beispielsweise OH, NHR, SH, Carboxylgruppen oder Carboxylamidgruppen.

Weisen die oben beschriebenen polymeren Dispergieradditive oder die erfindungsgemäßen modifizierten polymeren Dispergieradditive eine oder mehrere freie NCO-Gruppen auf, so wird T gewählt aus OH, NHR, SH. Weisen die oben beschriebenen polymeren Dispergieradditive oder die erfindungsgemäßen modifizierten polymeren Dispergieradditive eine oder mehrere freie OH-, NH- oder SH-Gruppen auf, so wählt man T bevorzugt aus Carboxylgruppen aus.

Durch Umsetzung der polymeren Dispergieradditive oder der erfindungsgemäßen modifizierten polymeren Dispergieradditive mit einem oder mehreren Äquivalenten des Polymers erhält man ein polymeres Dispergiermittel. Gegenstand der vorliegenden Erfindung sind ein Verfahren zur Herstellung von polymeren Dispergiermitteln aus den oben beschriebenen polymeren Dispergieradditiven oder den erfindungsgemäßen modifizierten polymeren Dispergieradditiven sowie die derart erhältlichen polymeren Dispergiermittel. Die erfindungsgemäßen polymeren Dispergiermittel eignen sich vorzüglich zur Dispergierung von anorganischen und organischen Pigmenten, insbesondere von organischen Pigmenten, in High-Solid-Lacksystemen und in lösemittelhaltigen Lacken, wobei unter Lösemitteln in diesem Zusammenhang nicht-wässrige Lösemittel zu verstehen sind.

Weiterhin eignen sich die erfindungsgemäßen Dispergiermittel vorzüglich zur Verwendung in lösemittelarmen Lacken, das sind Lacke mit weniger als 5 Vol.-% Lösemittel, und in lösemittelfreien Lacken. Ganz besonders eignen sich die erfindungsgemäßen polymeren Dispergiermittel zur Verwendung in Wasserbasislacken. Gut dispergieren lassen sich insbesondere die folgenden Pigmente:
Pigmente aus der Klasse der Chinacridonpigmenten wie beispielsweise P.R. 122, P.R. 202, P.V. 19,
Chinophthalonpigmente.wie beispielsweise P.Y. 138,
Isoindolinpigmente wie beispielsweise P.O. 69, P.O. 61, P.Y. 139, P.Y. 185,
Perylenpigmente wie beispielsweise P.R. 123, P.R. 149, P.R. 178, P.R. 179, P.R. 224, P.V. 29,
Phthalocyaninpigmente wie beispielsweise P.B. 15, P.B. 15:1, P.B. 15:2, P.B. 15:3, P.B. 15:4, P.B. 15:6 und P.B. 16, P.G. 7 und P.G. 36,
Indanthronpigmente wie beispielsweise P.B. 60 und P.B. 64,
Dioxazinpigmente wie beispielsweise P.V. 23,
Triarylcarboniumpigmente wie beispielsweise P.V. 27,
Disazopigmente wie beispielsweise P.O. 34, P.R. 144, P.R. 166, P.Y. 12, P.Y. 13, P.Y. 17, P.Y. 83, P.Y. 113 und P.Y. 126,
Monoazopigmente wie beispielsweise P.O. 5, P.O. 36, P.O. 67, P.R. 1, P.R. 2, P.R. 3, P.R. 48:4, P.R. 49, P.R. 52:2, P.R. 53, P.R. 57:1, P.R. 251, P.R. 112, P.R. 170, P.R. 184, P.R. 190,
Thioindigopigmente wie beispielsweise P.R. 88,
Metallkomplexpigmente wie beispielsweise P.Y. 117, P.Y. 153, P.Y. 177,
Perinonpigmente wie beispielsweise P.O. 43, P.R. 194,
Flavanthronpigmente wie beispielsweise P.Y. 24,
Anthrachinonpigmente wie beispielsweise P.Y. 147, P.V. 31.

Diese und weitere Beispiele für Pigmente finden sich bei W. Herbst, K. Hunger, Industrial Organic Pigments, VCH Weinheim, 1993.

Mit den erfindungsgemäßen polymeren Dispergiermitteln und mit den oben beschriebenen polymeren Dispergieradditiven lassen sich additivierte Pigmente und additivierte feste Pigmentpräparationen, additivierte flüssige Pigmentpräparationen sowie additivierte Pigmentpasten durch Vermischen von Pigmenten mit 1 bis 10 Gew.-% polymerem Dispergiermittel bzw. polymerem Dispergieradditiv herstellen. Eine erfindungsgemäße Verwendung der neuen Dispergiermittel sind daher Pigmente oder Pigmentpräparationen, hergestellt durch Additivierung mit den oben beschriebenen polymeren Dispergiermitteln oder den oben beschriebenen polymeren Dispergieradditiven. Gleichfalls sind die so erhältlichen additivierten Pigmente und additivierten Pigmentpräparationen Gegenstand der vorliegenden Erfindung.

Die Verarbeitung der erfindungsgemäßen polymeren Dispergiermittel lässt sich wie folgt skizzieren:

### Herstellung fester Pigmentpräparationen

### 1.1 Nassmahlung

Zur Herstellung fester Pigmentpräparationen werden 1-50 Gewichtsteile der genannten Verbindungen, sowie 100 Gewichtsteile Pigment eines bis zu 50%igen wasser- oder lösungsmittelfeuchten Pigmentpresskuchens in 1-1000 Gewichtsanteilen Wasser oder Lösungsmittel (bevorzugt Wasser) unter Zusatz von Mahlkörpern (Glaskugeln, oder SAZ-Kugeln 2-3 mm) in einem Skandex-Dispergieraggregat (Labor), bzw. in einer Rührwerkskugelmühle (Produktionsbetrieb) 1-16 Stunden dispergiert.

Die Mahlkörper werden abfiltriert, und die wässrige oder lösemittelhaltige Suspension kann beispielsweise sprühgetrocknet werden: 1.1.2 Trocknung ohne Filtration, Grobzerkleinerung

Die resultierende Suspension wird in einem Rotationsverdampfer oder einem Trockenschrank (beide Labor), oder in einem Vakuumschaufeltrockner (Produktionsbetrieb) zur Trockene eingeengt. Die resultierenden Pigmentstücke werden in einer kommerziellen Kaffeemühle (Labor) bzw. einer Perplexmühle grob zerkleinert.

### 1.1.3 Trocknung nach Filtration, Grobzerkleinerung

Das Wasser bzw. Lösungsmittel (bevorzugt Wasser) wird abfiltriert, so dass ein Lösemittel-feuchter Presskuchen entsteht. Der resultierende Presskuchen wird in Trockenschrank (Labor) oder auf einem Band- oder Schaufeltrockner (Produktionsbetrieb) getrocknet. Es schließt sich eine Grobzerkleinerung wie in 1.1.2 erwähnt an. Alternativ dazu kann der Presskuchen in einem Gefriertrockner gefriergetrocknet werden.

### Nassbelegung

Wasser- bzw. Lösungsmittel-feuchte feuchte Presskuchen bzw. wässrige oder lösemittelhaltige Suspensionen aus der Pigmentformierung (Kristallisation) mit 100 Gewichtsteilen Pigment werden mit 1-50 Gewichtsteilen der erfindungsgemäßen polymeren Dispergiermittel verrührt. Die resultierende Suspension wird wie in 1.1.1, 1.1.2 oder 1.1.3 weiter verarbeitet.

1.3 Trockene Pigmentpulver werden mit ausgewählten bei Raumtemperatur festen erfindungsgemäßen polymeren Dispergiermittel mechanisch vermischt.

1.4 Trockene Pigmentrohwaren werden mit ausgewählten bei Raumtemperatur festen erfindungsgemäßen polymeren Dispergiermittel unter Zusatz von Kugeln vermahlen

### 2. Herstellung flüssiger Pigmentpräparationen

Von der unter 1.1 beschrieben Suspension werden die Mahlkörper abgetrennt. Es kann ein Verdickungsmittel zugesetzt werden. Au-Berdem wird ein Retentionsmittel aus der Klasse der Polyalkylenglykole zugesetzt.

### 3. Herstellung von Pigmentpasten

### 3.1 Dispergierung fester Pigmentpräparationen

Die in 1 beschriebenen festen Pigmentpräparationen (1-40 Gewichtsteile) werden in einem Skandex-Schüttelaggregat (Labor) oder einer Rührwerkskugelmühle (Produktionsbetrieb) mit Mahlkörpern (2-3 mm, Glas oder SAZ) oder ohne Mahlkörper und 40-400 Gewichtsteilen Wasser oder Lösemittel (bevorzugt Wasser) dispergiert.

### 3.2 Zusatz der Additive bei der Pastenherstellung

100 Gewichtsteile formierter Pigmentpulver, welche keine weiteren Additive enthalten, werden wie in 3.1 beschrieben dispergiert. Bei der Dispergierung werden 5-30 Gewichtsteile der erfindungsgemäßen polymeren Dispergiermittel zugesetzt. Dabei wird das Pigment langsam in eine Polymerlösung bzw. Dispersion unter Rührung eingestreut und erst danach die Dispergierung durch Zusatz der Mahlkörper gestartet.

### 4. Auflacken

Die in 3 beschriebenen wässrigen Pasten, sowie die in 2 beschriebenen flüssigen Präparationen werden mit 1K- oder 2K-Lacken aufgelackt. Zu nennen sind an dieser Stelle als 1K-Lacke solche auf Basis von Alkyd, Acrylat, Epoxid, Polyvinylacetat, Polyester oder Polyurethan. Als 2K Lacke sind zu nennen z.B. hydroxylgruppenhaltige Polyacrylate, oder Polyesterharze und Melaminharzen oder gegebenenfalls mit blockierten Polyisocyanatharzen als Vernetzer.

Die Erfindung wird durch Arbeitsbeispiele erläutert. Wenn nicht anders angegeben, wurden die verwendeten Lösemittel nach Standardmethoden getrocknet, siehe beispielsweise Autorenkollektiv Organikum, 3. Nachdruck der 15. Auflage, VEB Verlag der Wissenschaften, Leipzig 1984, Kapitel F: Reagenzienanhang (Seite 782 - 809). Stickstoff wurde zum Trocknen über je einen Trockenturm mit CaCl₂ und Blaugel geleitet.

### 1. Synthesebeispiele

### Beispiel 1.1

### Herstellung eines hyperverzweigten Polyisocyanats mit einer mittleren NCO-Funktionalität von 7

In ein Reaktionsgefäß, ausgestattet mit Rührer, Tropftrichter, Innenthermometer und Gaseinleitrohr wurden 1000 g Isophorondiisocyanat unter Begasung mit trockenem Stickstoff vorgelegt und innerhalb 1 min 300g Trimethylolpropan, gelöst in 1300 g trockenem Butylacetat, unter gutem Rühren zugegeben. Nach Zudosierung von 0,2 g Dibutylzinn-dilaurat wurde die Reaktionsmischung auf 50°C erwärmt, bei dieser Temperatur gerührt und die Abnahme des NCO-Gehaltes titrimetrisch nach DIN 53 185 verfolgt. Bei Erreichen eines NCO-Gehaltes von 7,3 Gew.-% wies das Reaktionsprodukt eine mittlere Funktionalität bezüglich NCO von 2 und bezüglich OH von 1 auf. Dem Additionsprodukt wurden nun 650 g BASONAT® HI 100, gelöst in 650 g trockenem Butylacetat, zugesetzt, die Mischung auf 70°C erwärmt und 3 h bei dieser Temperatur gerührt. Das Endprodukt wies einen NCO-Gehalt von 5,9 Gew.-% und eine Viskosität von 920 mPa·s, gemessen bei 25°C, auf. Die mittlere Molmasse des Polyisocyanats betrug 2609 g/mol, die mittlere Funktionalität bezogen auf NCO-Gruppen betrug etwa 7.

### 1.2.Umsetzung des hochverzweigten Polyisocyanats aus 1.1. mit Pluriol® A 2000 E und weiteren Komponenten

In einem 1-1-Vierhalskolben mit Rührer, Thermometer und Rückflusskühler wurden 100 ml Tetrahydrofuran, 57,1 g (10,6 mmol) hochverzweigtes Polyisocyanat aus 1.1. und 99,5 g (53,3 mmol) Pluriol® A 2000 E vorgelegt. Der Isocyanatgehalt dieser Mischung lag bei 1,20 %. Unter Rühren wurde anschließend Zulauf 1 (s.u.) zugegeben. Nach Zugabe von 2 Tropfen (= 50 mg) Dibutylzinndilaurat wurde der Ansatz auf 80 °C erwärmt und bis zur vollständigen Reaktion der Isocyanatgruppen bei dieser Temperatur gehalten.

Für Zulauf 1 wurden folgende Substanzen eingesetzt:

| | | |
|---|---|---|
| 1.2.1 | 131,76 g | (22,4 mmol) Luviskol® K 17 |
| 1.2.2 | 6,04 g | (22,4 mmol) Stearylamin |

Zur Aufarbeitung wurde der Kolbeninhalt mit 400 g Wasser versetzt und mit einem Schnellrührer mit Dispergierscheibe 5 Minuten bei 2800 Umdrehungen/min gerührt. Anschließend wurde das Tetrahydrofuran bei 70°C/150 mbar abdestilliert.

### 1.3.Synthese des hyperverzweigten Polyurethans 1.3:

In einem Reaktionsgefäß, versehen mit Rührer, Innenthermometer, Tropftrichter und Gaseinleitrohr, wurden 1000 g Isophorondiisocyanat (IPDI) unter Stickstoffbedeckung bei 23°C vorgelegt und innerhalb 1 min 300g Trimethylolpropan (TMP), gelöst in 1300 g wasserfreiem 2-Butanon, unter gutem Rühren zugegeben. Nach Zudosierung von 0,2 g Dibutylzinn-dilaurat wurde die Reaktionsmischung auf 50°C erwärmt, bei dieser Temperatur gerührt und die Abnahme des NCO-Gehaltes titrimetrisch gemäß DIN 53 185 verfolgt. Bei Erreichen eines NCO-Gehaltes von 5,4 Gew.-% wurden 147 g 2,4-Toluylendiisocyanat (TDI) zugesetzt, die Mischung auf 60°C erwärmt und 1 h bei dieser Temperatur gerührt. Nach beendeter Reaktion wies die Lösung einen NCO-Gehalt von 5,7 Gew.-% auf. Die berechnete mittlere Molmasse des Polyisocyanats betrug 2420 g/mol, die mittlere Funktionalität betrug 5,9 NCO-Gruppen pro Molekül.

### 1.4. Synthese des hyperverzweigten Polyurethan-Ammoniumsalzes 1.4.

In ein Reaktionsgefäß, versehen mit Rührer und Tropftrichter, wurden 150g des Polyisocyanats aus Beispiel 1.3 bei 23°C mit 150g wasserfreiem Aceton versetzt. Anschließend wurde unter heftigem Rühren eine Lösung aus 18,8g β-Alanin, 100g destilliertem Wasser, 8,4g festem Natriumhydroxid und 50 g Aceton innerhalb von 30 s zugegeben und die Reaktionsmischung 30 min bei Raumtemperatur gerührt. Anschließend wurde das Produkt am Rotationsverdampfer bei vermindertem Druck von Aceton und 2-Butanon befreit, in 1500 ml Wasser gelöst und durch Zugabe eines Überschusses von 0,1n wässriger Salzsäure ausgefällt. Nach dem Absaugen und einmaligem Waschen mit 200 ml Wasser wurde das Produkt im Vakuum bei 50°C getrocknet. Dem trockenen Säuregruppen enthaltendem Polyurethan wurden anschließend 29g 25%ige wässrige Ammoniaklösung zusetzt und mit Wasser so verdünnt, dass eine 50%ige wässrige Lösung des Polyurethan-Ammoniumsalzes 1.4. resultierte.

### 1.5.Synthese des hyperverzweigten Polyurethan-Ammoniumsalzes 1.5.:

In ein Reaktionsgefäß, versehen mit Rührer, Tropftrichter, Innenthermometer und Gaseinleitrohr wurden unter Stickstoffbedeckung 150g des Polyisocyanats aus Beispiel 1.3 bei 23°C mit 8 g Hydroxyethylacrylat und 0,05 g Dibutylzinn-dilaurat versetzt, auf 60°C erwärmt und 3 h bei dieser Temperatur, gerührt. Anschließend wurde die Mischung auf 23°C abgekühlt und mit 150g wasserfreiem Aceton versetzt. Dann wurde unter heftigem Rühren eine Lösung aus 12,3g β-Alanin, 100g destilliertem Wasser, 5,5g festem Natriumhydroxid und 50g Aceton innerhalb von 30 s zugegeben und die Reaktionsmischung 30 min bei Raumtemperatur gerührt. Anschließend wurde das Produkt am Rotationsverdampfer bei vermindertem Druck von Aceton und 2-Butanon befreit, in 1500 ml Wasser gelöst und durch Zugabe eines Überschusses von 0,ln wässriger Salzsäure ausgefällt. Nach dem Absaugen und einmaligem Waschen mit 200 ml Wasser wurde das Produkt im Vakuum bei 50°C getrocknet. Dem trockenen, Säuregruppen und acrylische Doppelbindungen enthaltendem Polyurethan wurden anschließend 18g 25Gew.-% wässrige Ammoniaklösung zusetzt und mit Wasser so verdünnt, dass eine 20 Gew.-% wässrige Lösung des Polyurethan-Ammoniumsalzes 1.5 resultierte.

### 1.6.Synthese des hyperverzweigten Polyurethan-Ammoniumsalzes 1.6:

In ein Reaktionsgefäß, versehen mit Rührer, Tropftrichter, Innenthermometer und Gaseinleitrohr wurden unter Stickstoffbedeckung 150g des Polyisocyanats aus Beispiel 1.3 bei 23°C vorgelegt und mit 150 ml wasserfreiem Aceton versetzt. Dann wurde bei Raumtemperatur eine Lösung von 8,9 g Dibutylamin und 10 g Aceton langsam zugegeben, so dass 30 °C nicht überschritten wurden. Anschließend wurde der Mischung unter heftigem Rühren eine Lösung aus 12,3g β-Alanin, 100g destilliertem Wasser, 5,5g festem Natriumhydroxid und 50g Aceton innerhalb von 30 s zugegeben und die Reaktionsmischung 30 min bei Raumtemperatur gerührt. Das Produkt wurde dann am Rotationsverdampfer bei vermindertem Druck von Aceton und 2-Butanon befreit, in 1500 ml Wasser gelöst und durch Zugabe eines Überschusses von 0,1n wässriger Salzsäure ausgefällt. Nach dem Absaugen und einmaligem Waschen mit 200 ml Wasser wurde das Produkt im Vakuum bei 50°C getrocknet. Dem trockenen, Säuregruppen enthaltendem Polyurethan wurden anschließend 19g 25 Gew.-% wässrige Ammoniaklösung zusetzt und mit Wasser so verdünnt, dass eine 20 Gew.-% wässrige Lösung des Polyurethan-Ammoniumsalzes 1.6. resultierte.

### 1.7.Synthese des hyperverzweigten Polyurethan-Ammoniumsalzes 1.7.:

In einem Reaktionsgefäß, versehen mit Rührer, Innenthermometer, Tropftrichter und Gaseinleitrohr, wurden 672 g Hexamethylendiisocyanat (HDI) und 672 g wasserfreies Dimethylacetamid (DMAc) bei 23°C unter Stickstoffbedeckung vorgelegt. Anschließend wurde innerhalb von 10 min die Lösung aus 268 g Trimethylolpropan, 268 g Dimethylolpropionsäure und 1072 g wasserfreiem DMAc, unter gutem Rühren zugegeben. Dann wurde die Reaktionsmischung auf 70°C erwärmt, bei dieser Temperatur gerührt und die Abnahme des NCO-Gehaltes titrimetrisch gemäß DIN 53 185 verfolgt. Bei Erreichen eines NCO-Gehaltes der Mischung von 2,0 Gew.-% wurden 400 g Pluriol® E 400 (difunktionelles Polyethylenglykol, mittlere Molmasse 400 g/mol, BASF Aktiengesellschaft) zugesetzt und 3 h bei 60°C nachgerührt. Während dieser Zeit sank der NCO-Gehalt der Mischung auf 0%. Das Produkt wurde anschließend im Dünnschichtverdampfer bei 140°C Manteltemperatur bei einem Druck von 1,4 mbar von Lösungsmittel befreit.

Das farblose, hochviskose Produkt wurde mit 25 Gew.-% wässriger Ammoniaklösung auf einen pH-Wert von 8 eingestellt und anschließend mit Wasser zu einer 50%igen Lösung verdünnt.

### 2. Prüfungen auf dispergierende Eigenschaften

### Allgemeines Vorgehen

In einer 50-ml-Glasflasche wurden folgende Komponenten zusammengegeben:

| | |
|---|---|
| 2,25 g | Dispergieradditiv (berechnet auf 100 Gew.-% Feststoffgehalt) |
| 1,13 g | 1,2-Propylenglykol |
| 0,11 g | Proxel® XL2 |
| 0,02 g | Etingal® A |
| 15,83 g | Wasser |

Die Flaschen wurden verschlossen und mit der Hand geschüttelt, bis alle Inhaltsstoffe homogen verteilt bzw. gelöst waren. Anschließend wurden 22,5 g Glaskugeln vom Durchmesser 250 - 420 µm und 2,25 g Farbpigment (Hostaperm® Rosa E-WD) zugegeben. Die Flaschen wurden wieder fest verschlossen und 2 Stunden im Skandex-Mischer (Typ BAS 20) dispergiert. Anschließend wird von der Dispersion über Lichtstreuung im Malvern Zetasizer (Typ DTS 5100) die Teilchengröße bestimmt.

### Ergebnisse:

| Dispergieradditiv | Teilchengröße | Polydispersität |
|---|---|---|
| | [nm] | |
| 1.2.1 | 295 | 0,53 |
| 1.2.2 | 276 | 0,11 |
| 1.3. | - | - |
| 1.4. | 213 | 0,12 |
| 1.5. | 226 | 0,20 |
| 1.6. | 269 | 0,07 |
| 1.7. | 236 | 0,17 |
| V 1 (Vergleichsbeispiel) | 542 | 0,22 |
| V 2 (Vergleichsbeispiel) | 1151 | 0,67 |
| V 3 (Vergleichsbeispiel) | 593 | 0,58 |

Erwünscht sind möglichst geringe Polydispersität bei möglichst geringer Teilchengröße. Die Polydispersität wird vom Gerät "Zetasizer" ermittelt.

### Vergleichsbeispiele:

| | |
|---|---|
| V1 | Polyurethan hergestellt nach Beispiel C in WO 91/14515, Seite 35, statistisch, keine hyperverzweigten Strukturen |
| V2 | Polyurethan hergestellt nach US 5,368,944, Beispiel 1.1. |
| V3 | Polyurethan hergestellt nach US 5,368,944, Beispiel 2 |

## Patentansprüche

1. Verfahren zur Herstellung von hydrophil modifizierten hyperverzweigten Polyurethanen, indem man zunächst ein hyperverzweigtes Polyurethan mit 2 bis 100 NCO-Gruppen und einem Molekulargewicht von 500 bis 50.000 g herstellt unter Einsatz von einem oder mehreren ABₓ-Monomeren, wobei A eine Isocanatgruppe bedeutet und B eine mit Isocyanat zur Reaktion fähige Gruppe oder umgekehrt, und wobei x eine natürliche Zahl von 2 bis 8 ist, und das hyperverzweigte Polyurethan mit einem oder mehreren Polyetherderivaten umsetzt, ausgewählt aus Polyethylenglykolderivaten der allgemeinen Formel I 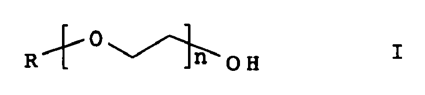 und Poly-THF-Derivaten der allgemeinen Formel II 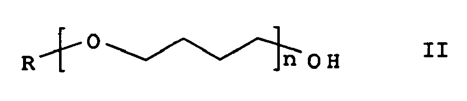 in denen jeweils
R ausgewählt ist aus C₁-C₄₀-Alkyl oder C₇-C₁₃-Aralkyl oder C₆-C₁₄-Aryl und
n eine ganze Zahl von 2 bis 500 bedeutet, bevorzugt 2 bis 200,
und Copolymeren aus Ethylenoxid und Propylenoxid oder Butylenoxid oder Terpolymeren aus Ethylenoxid und Propylenoxid und Butylenoxid, die verzweigt sein können.

2. Verfahren nach Anspruch 1, **dadurch gekennzeichnet, dass** man das Polyetherderivat in einem Unterschuss, bezogen auf die NCO-Gruppen des hyperverzweigten Polyurethans, einsetzt, und die nicht umgesetzten NCO-Gruppen anschließend zu pigmentaffinen Gruppen umsetzt, ausgewählt aus -COOH, -COOR', -CONHR', CONH₂, -OH, -NH₂, -SH, -NHR', -NR'₂, -SO₃R', -N(Phthalimid), -NH'COOR', -NHCONH₂, -NHCONHR' oder CN wobei R' gewählt wird aus geadkettigen oder verzweigten Alkylresten, Aralkylresten oder Arylresten, die verzweigt sein können.

3. Verfahren nach den Ansprüchen 1 oder 2, **dadurch gekennzeichnet, dass** man die Umsetzung der NCO-Gruppen zu pigmentaffinen Gruppen mit aliphatischen oder aromatischen Alkoholen, Thiolen, Aminen oder Carbonsäurederivaten durchführt.

4. Modifizierte polymere Dispergieradditive, erhältlich nach einem Verfahren der Ansprüche 1 bis 3.

5. Verwendung von hydrophil modifizierten hyperverzweigten Polyurethanen als polymere Dispergieradditive für Pigmente,
wobei das oder die hyperverzweigten Polyurethane hergestellt sind unter Einsatz von einem oder mehreren ABₓ-Monomeren, wobei A eine Isocanatgruppe bedeutet und B eine mit Isocyanat zur Reaktion fähige Gruppe oder umgekehrt, und wobei x eine natürliche Zahl von 2 bis 8 ist, und indem man das so hergestellte hyperverzweigte Polyurethan mit 2 bis 100 NCO-Gruppen und einem Molekulargewicht von 500 bis 50.000 g mit einem oder mehreren Polyetherderivaten umsetzt, ausgewählt aus Polyethylenglykolderivaten der allgemeinen Formel I 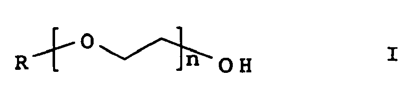 und Poly-THF-Derivaten der allgemeinen Formel II 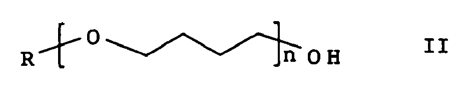 in denen jeweils
R ausgewählt ist aus C₁-C₄₀-Alkyl oder C₇-C₁₃-Aralkyl oder C₆-C₁₄-Aryl und
n eine ganze Zahl von 2 bis 500 bedeutet, bevorzugt 2 bis 200,
und Copolymeren aus Ethylenoxid und Propylenoxid oder Butylenoxid oder Terpolymeren aus Ethylenoxid und Propylenoxid und Butylenoxid, die verzweigt sein können.

6. Verwendung der polymeren Dispergieradditive nach Anspruch 4 in lösemittelhaltigen Lacken.

7. Verfahren zur Herstellung von polymeren Dispergiermitteln, **dadurch gekennzeichnet, dass** man ein hydrophil modifiziertes hyperverzweigtes Polyurethan nach Anspruch 4 mit einem oder mehreren Äquivalenten eines Polymers der allgemeinen Formel III
U-(M)_{y}-T III
umsetzt, in dem die Variablen wie folgt definiert sind:
U ausgewählt aus Wasserstoff, C₁-C₁₈-Alkyl, C₇-C₁₃-Aralkyl, C₆-C₁₄-Aryl, oder einem Rest aus einem Radikalstartermolekül,
M gleiche oder verschiedene Monomereinheiten, ausgewählt aus (Meth)acryleinheiten, Acrylamideinheiten, Polyvinylacetateinheiten, Polyvinylalkoholeinheiten oder Polyethylenimideinheiten, linearen Polyurethane, Polyestereinheiten oder Polyamideinheiten;
y ist eine ganze Zahl von 10 bis 100.000;
T funktionelle Gruppen, die mit den NCO-Gruppen oder OH-Gruppen der polymeren Dispergieradditive reagieren.

8. Verwendung der polymeren Dispergiermittel, hergestellt nach einem Verfahren nach Anspruch 7 in lösemittelfreien Lacken oder lösemittelfreien Anstrichmitteln.

9. Pigmentpräparationen, hergestellt durch Zusatz von polymeren Dispergiermitteln, hergestellt nach einem Verfahren nach Anspruch 7, oder von hydrophil modifizierten polymeren Dispergieradditiven nach Anspruch 4 als Additiv, zu Pigmenten.

10. Verwendung von Pigmentpräparationen nach Anspruch 9 in lösemittelfreien Lacken oder lösemittelfreien Anstrichmitteln.

11. Verwendung der polymeren Dispergiermittel, hergestellt nach einem Verfahren nach Anspruch 7, in Wasserbasislacken.

12. Wasserbasislacke, enthaltend polymere Dispergiermittel, hergestellt nach einem Verfahren nach Anspruch 7.

## Claims

1. A process for preparing hydrophilically modified hyperbranched polyurethanes, in which first a hyperbranched polyurethane having from 2 to 100 NCO groups and a molecular weight of from 500 to 50 000 g is prepared by using one or more ABₓ monomers, A being an isocyanate group and B being a group that is reactive with isocyanate, or vice versa, and x being a natural number from 2 to 8, and the hyperbranched polyurethane is reacted with one or more polyether derivatives selected from polyethylene glycol derivatives of the formula I 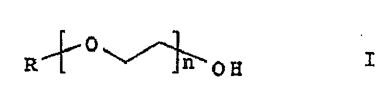 and polyTHF derivatives of the formula II 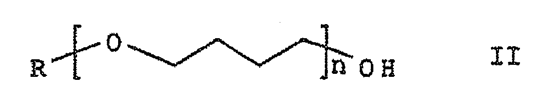 where in each case
R is selected from C₁-C₄₀ alkyl or C₇-C₁₃ aralkyl or C₆-C₁₄ aryl and
n is an integer from 2 to 500, preferably from 2 to 200,
and copolymers of ethylene oxide and propylene oxide or butylene oxide or terpolymers of ethylene oxide and propylene oxide and butylene oxide, it being possible for said polymers to be branched.

2. The process according to claim 1, wherein the polyether derivative is used in a substoichiometric amount relative to the NCO groups of the hyperbranched polyurethane and the unreacted NCO groups are subsequently reacted to pigment affinity groups selected from -COOH, -COOR', -CONHR', CONH₂, -OH, -NH₂. -SH, -NHR', -NR'₂, -SO₃R', -N(phthalimide), -NH'COOR', -NHCONH₂, -NHCONHR' or CN, where R' is selected from straight-chain or branched alkyl radicals, aralkyl radicals or aryl radicals, it being possible for said radicals to be branched.

3. The process according to either of claims 1 and 2, wherein the reaction of the NCO groups to pigment affinity groups is carried out with aliphatic or aromatic alcohols, thiols, amines or carboxylic acid derivatives.

4. A modified polymeric dispersing additive obtainable by a process of any of claims 1 to 3.

5. The use of hydrophilically modified hyperbranched polyurethanes as polymeric dispersing additives for pigments,
the hyperbranched polyurethane(s) being prepared by using one or more ABₓ monomers, A being an isocyanate group and B being a group that is reactive with isocyanate, or vice versa, and x being a natural number from 2 to 8, and in which the thus prepared hyperbranched polyurethane having from 2 to 100 NCO groups and a molecular weight of from 500 to 50 000 g is reacted with one or more polyether derivatives selected from polyethylene glycol derivatives of the formula I 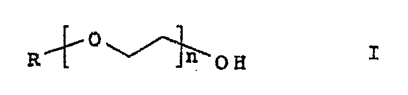 and polyTHF derivatives of the formula II 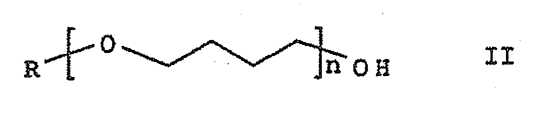 where in each case
R is selected from C₁-C₄₀ alkyl or C₇-C₁₃ aralkyl or C₆-C₁₄ aryl and
n is an integer from 2 to 500, preferably from 2 to 200,
and copolymers of ethylene oxide and propylene oxide or butylene oxide or terpolymers of ethylene oxide and propylene oxide and butylene oxide, it being possible for said polymers to be branched.

6. The use of the polymeric dispersing additives according to claim 4 in a solventborne coating material.

7. A process for preparing polymeric dispersants which comprises reacting a hydrophilically modified hyperbranched polyurethane according to claim 4 with one or more equivalents of a polymer of the formula III
U-(M)_{y}-T III
where the variables are defined as follows:
U is selected from hydrogen, C₁-C₁₈ alkyl, C₇-C₁₃ aralkyl, C₆-C₁₄ aryl or a radical of a free-radical initiator molecule,
M is identical or different monomer units selected from (meth)acrylic units, acrylamide units, polyvinyl acetate units, polyvinyl alcohol units or polyethyleneimide units, linear polyurethanes, polyester units or polyamide units,
y is an integer from 10 to 100 000, and
T is functional groups which react with the NCO groups or OH groups of the polymeric dispersing additives.

8. The use of the polymeric dispersant prepared by a process according to claim 7 in solvent-free coating materials or solvent-free paints.

9. A pigment preparation prepared by addition of polymeric dispersants prepared by a process according to claim 7 or of hydrophilically modified polymeric dispersing additives according to claim 4 as an additive to pigments.

10. The use of a pigment preparation according to claim 9 in solvent-free coating materials or solvent-free paints.

11. The use of the polymeric dispersant prepared by a process according to claim 7 in a waterborne coating material.

12. A waterborne coating material comprising a polymeric dispersant prepared by a process according to claim 7.

## Revendications

1. Procédé de préparation de polyuréthannes hyperramifiés à modification hydrophile en préparant d'abord un polyuréthanne hyperramifié avec 2 à 100 groupes NCO et un poids moléculaire de 500 à 50.000 g en utilisant un ou plusieurs monomères ABₓ, A désignant un groupe isocyanate et B un groupe apte à la réaction avec un isocyanate ou inversement et x désignant un nombre naturel de 2 à 8 et le polyuréthanne hyperramifié étant mis en réaction avec un ou plusieurs dérivés de polyéther, sélectionnés à partir de dérivés de polyéthylèneglycol de formule générale I 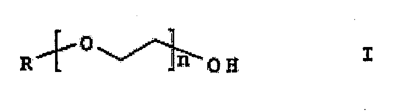 et de dérivés poly-THF de formule générale II 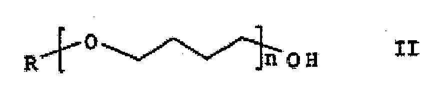 dans lesquels à chaque fois :
R est sélectionné à partir des radicaux C₁-C₄₀-alkyle ou C₇-C₁₃-aralkyle ou C₆-C₁₄-aryle et
n désigne un nombre entier de 2 à 500, de préférence 2 à 200,
et de copolymères d'oxyde d'éthylène et d'oxyde de propylène ou d'oxyde de butylène ou de terpolymères d'oxyde d'éthylène et d'oxyde de propylène et d'oxyde de butylène qui peuvent être ramifiés.

2. Procédé selon la revendication 1, **caractérisé en ce que** l'on utilise le dérivé de polyéther dans une quantité insuffisante par rapport aux groupes NCO du polyuréthanne hyperramifié et les groupes NCO qui n'ont pas réagi sont ensuite amenés à réagir en groupes à affinité pigmentaire sélectionnés parmi -COOH, -COOR', -CONHR', CONH₂, -OH, -NH₂, -SH, -NHR', -NR'_{2'}, -SO₃R', -N(phtalimide), -NH'COOR', -NHCONH₂, -NHCONHR' ou CN, R' étant sélectionné à partir de radicaux alkyle, aralkyle ou aryle à chaîne droite ou ramifiée qui peuvent être ramifiés.

3. Procédé selon l'une des revendications 1 ou 2, **caractérisé en ce que** la réaction des groupes NCO en groupes à affinité pigmentaire est effectuée avec des alcools, thiols, amines ou dérivés carboxyliques aliphatiques ou aromatiques.

4. Additifs de dispersion polymères modifiés obtenus selon un procédé des revendications 1 à 3.

5. Utilisation de polyuréthannes hyperramifiés à modification hydrophile comme additifs dispersants polymères pour des pigments,
le ou les polyuréthannes hyperramifiés étant synthétisés en utilisant un ou plusieurs monomères ABₓ, A désignant un groupe isocyanate et B un groupe apte à la réaction avec un isocyanate ou inversement et x désignant un nombre naturel de 2 à 8 et le polyuréthanne hyperramifié ainsi préparé ayant 2 à 100 groupes NCO et un poids moléculaire de 500 à 50.000 g étant mis en réaction avec un ou plusieurs dérivés de polyéther, sélectionnés à partir de dérivés de polyéthylèneglycol de formule générale I 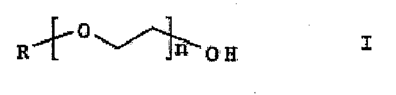 et de dérivés poly-THF de formule générale II 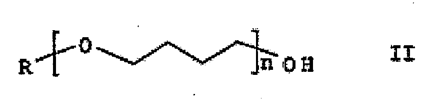 dans lesquels à chaque fois:
R est sélectionné à partir des radicaux C₁-C₄₀-alkyle ou C₇-C₁₃-aralkyle ou C₆-C₁₄-aryle et
n désigne un nombre entier de 2 à 500, de préférence de 2 à 200,
et de copolymères d'oxyde d'éthylène et d'oxyde de propylène ou d'oxyde de butylène ou des terpolymères d'oxyde d'éthylène et d'oxyde de propylène et d'oxyde de butylène qui peuvent être ramifiés.

6. Utilisation des additifs dispersants polymères selon la revendication 4 dans des peintures à base de solvant.

7. Procédé de préparation d'additifs dispersants polymères **caractérisé en ce que** l'on met en réaction un polyuréthanne hyperramifié à modification hydrophile selon la revendication 4 avec un ou plusieurs équivalents d'un polymère de formule générale III
U-(M)_{y}-T III
dans laquelle les variables sont définies comme suit :
U sélectionné à partir d'hydrogène, de C₁-C₁₈-alkyle, C₇-C₁₃-aralkyle, C₆-C₁₄-aryle ou d'un résidu à partir d'une molécule d'amorce radicalaire,
M des unités monomères identiques ou différentes, sélectionnées à partir d'unité (méth)acrylique, d'unités acrylamide, d'unités polyvinylacétate, d'unités alcool polyvinylique ou d'unités polyéthylèneimide, de polyuréthannes linéaires, d'unités polyester ou d'unités polyamide ;
y est un nombre entier de 10 à 100.000 ;
T des groupes fonctionnels qui réagissent avec les groupes NCO ou les groupes OH des additifs dispersants polymères.

8. Utilisation des agents dispersants polymères, préparés selon un procédé conforme à la revendication 7 dans des peintures sans solvant ou des agents d'enduction sans solvant.

9. Préparations de pigment préparées par addition à des pigments de dispersants polymères préparés selon un procédé conforme à la revendication 7 ou d'additifs dispersants polymères à modification hydrophile selon la revendication 4 comme additif.

10. Utilisation de préparations de pigments selon la revendication 9 dans des peintures sans solvant ou des agents d'enduction sans solvant.

11. Utilisation des agents dispersants polymères préparés selon un procédé conforme à la revendication 7 dans des peintures à base aqueuse.

12. Peintures à base aqueuse contenant des dispersants polymères, préparés selon un procédé conforme à la revendication 7.
